# EUROPEAN PATENT APPLICATION

(11) **EP 3 412 442 A1**
(43) Date of publication of application: **12.12.2018**
(21) Application number: 18176318.6
(22) Date of filing: 06.06.2018
(51) Int. Cl.: B29D 99/00, B29C 43/00, B29C 37/00

(54) **ARTICLE MADE OF PLASTIC MATERIAL AND METHOD FOR ITS PRODUCTION**

(30) Priority: 09.06.2017 IT 201700063339
(71) Applicant: Darrell Company S.R.L., 30010 Componogara, VE (IT)
(72) Inventor: XODO, Franca, 35020 Arzergrande PD (IT); MAGGETTO, Adriana, 35020 Sant' Angelo di Piove di Sacco PD (IT)
(74) Representative: Modiano, Micaela Nadia

(57) **Abstract**

An article made of plastic material constituted by a body (11) made of EVA and at least another element (12) made of polyurethane, or similar materials, which is at least partially overlaid.

## Description

The present invention relates to an article made of plastic material and to its production method.

The invention can be applied in an industrial context.

In particular the invention can be applied in the sector of clothing accessories, for example for bags, work bags or suitcases, in the shoe sector, for example for safety shoes or orthopedic shoes, however it can also be applied advantageously in other sectors, such as for example the marine sailing sector, in the fenders of boats.

Nowadays, many types of articles made of plastic material are widespread, from shoes and clothing accessories right up to car parts and components for construction.

In recent years, with the search for materials that are increasingly high-performing, light and comfortable, articles have become successful on the market which are made completely, or partially, of EVA (ethylene vinyl acetate).

EVA is a co-polymer of ethylene and vinyl acetate, an expanded plastic material that is extremely flexible, light and elastic. For these characteristics it is used for making various different types of articles, for example some types of bags or boots. However, EVA is not capable of sufficiently withstanding shocks, abrasions or perforations and it can therefore be advantageous to affix elements made of another polymer. Generally, in order to ensure better thermal insulation and resistance to impact, abrasion and perforations, articles made of EVA are overlaid with elements made of polyurethane or rubber, materials that are better provided with these properties.

Theoretically, providing an article made of EVA with an element made of polyurethane entails: molding the body of the article, wherein the EVA is injected into the mold, and when the mold is opened it expands and cross-links, forming pores; in the final step of cross-linking and cooling, a kind of film is formed which closes the external surface pores. This kind of film, at the surface on which the element made of polyurethane will be applied, is removed by way of carding to expose the pores. Carding is a surface scraping operation. Then a layer of adhesive, usually heat-reactive, is applied at the carded area, and the element made of polyurethane, which was molded separately and in its turn carded and treated with adhesives, is applied at the layer of adhesive. The assembly is optionally placed in an oven to activate the adhesive and bond the element made of polyurethane to the body made of EVA.

However, such known art has a number of drawbacks.

The formation of this kind of surface film on the EVA determines the necessity of the carding operation and the application of adhesives, to make the EVA compatible with the polyurethane.

Carding is an expensive operation in terms of time and cost, with consequent increase in the production time of the object and in the overall cost of its production, and as a consequence the provision of the article as described above is not implemented.

The aim of the present invention is to provide articles that are capable of improving the known art in the aspects indicated above.

Within this aim, an object of the invention is to provide articles constituted by a body made of EVA and at least one other element made of polyurethane which is at least partially overlaid on the most suitable area: for example, the area most exposed to the danger of abrasion.

Another object of the invention is to provide articles with the body made of EVA and elements made of polyurethane, carrying out the permanent bond between the body and the elements in such a way as to reduce the number of operations necessary and the costs.

A further object of the invention is to provide the bond between the structure made of EVA and the element made of polyurethane while reducing the necessary time.

Furthermore, another object of the present invention is to overcome the drawbacks of the known art in an alternative manner to any existing solutions.

Another object of the invention is to provide an article that is highly reliable, easy to implement and low cost.

This aim and these and other objects which will become better apparent hereinafter are achieved by an article according to the invention which is constituted by a body made of EVA and at least one other element made of polyurethane, which is at least partially overlaid on the body.

Further characteristics and advantages of the invention will become better apparent from the description of a preferred, but not exclusive, embodiment of the article according to the invention, which is illustrated by way of non-limiting example in the accompanying drawings wherein:

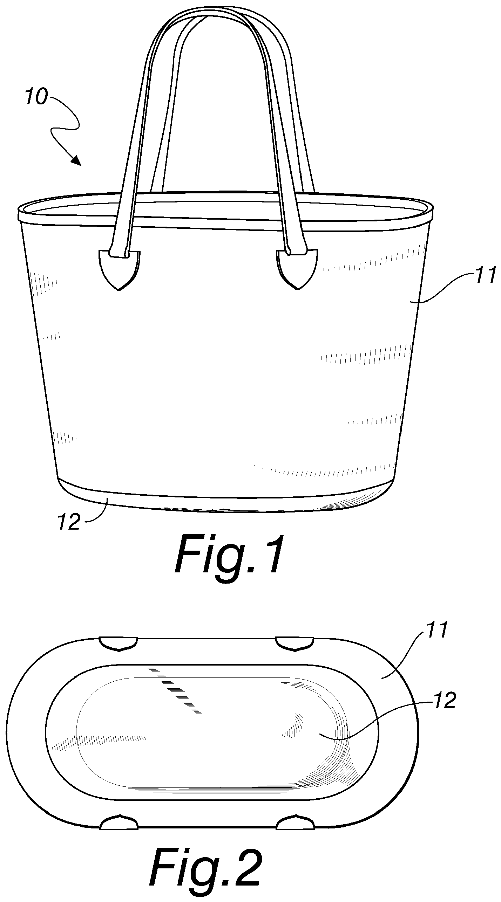

- Figure 1 is an overall view of a bag provided according to the invention;
- Figure 2 is a plan view from below of the bag of Figure 1.

With reference to the figures, a bag is taken as example.

The bag provided according to the invention is designated with the reference numeral 10 and comprises a body 11 made of EVA, of the most suitable shape and size. Under the body 11 of the bag there is an element 12 made of polyurethane. The element 12, partially overlaid on the layer of EVA, constitutes the external portion of the bottom of the bag and has the most advantageous geometry and size to ensure the best resistance to the danger of abrasion or perforation.

The peculiarity of this article lies in its production process and in particular in the method for providing the bond between the body 11 of the bag made of EVA and the element 12 made of polyurethane. In fact in order to provide the body 11 the EVA in the solid state is inserted into a heated mold. Once the mold is opened the EVA, which has reached extremely high temperatures, for example of the order of 180°C, expands and cross-links. Before the cross-linking is complete and while the EVA is still hot, in order to prevent the formation of the surface film, a layer of primer is applied, of the type also known as "adhesion promoter". One primer that can be used is, for example, based on toluene with perchloroethylene or the like, of the type available on the market under the commercial name E 172/A produced by the company Industrie Chimiche Forestali S.P.A. located in Marcallo con Casone (Milano, Italy), which is composed of 60-80% by weight toluene and 25-30% by weight perchloroethylene. The primer ensures that the surface film described above does not form and the pores of the expansion of the EVA remain exposed. When cross-linking is complete, with the pores exposed in the area of application of the external portion of the bottom, the external portion of the bottom, in this case the element 12, can be molded directly onto the body 11. Advantageously the operation of molding the element 12 made of polyurethane can be carried out immediately or later, even after some months. In this second case, the bodies 11 made of EVA and treated with primer will be kept in storage until the time of molding the element 12. Conveniently it is possible to execute the operation of molding the EVA in one location and that of molding the polyurethane in another. The polyurethane in the fluid state is injected at high pressure into the impression of the mold into which the base of the body 11 has been partially inserted. The polyurethane penetrates at least the surface pores of the EVA, remaining firmly bonded thereto.

The process for providing a bag according to the invention is therefore the following: the body 11 of the bag is provided, i.e. the EVA is inserted in the solid state into a hot mold; once the mold is opened it is allowed to expand and cross-link, but before the cross-linking is complete the primer is applied to the portion where the bottom 12 will be arranged; then the end of the cross-linking is awaited; the bottom 12 is provided, i.e. the polyurethane in the fluid state is injected at high pressure into the impression of the mold into which the base of the body 11 of the bag 10 has been partially inserted; at the end of the polyurethane cross-linking process the product is extracted from the mold and the handles, made separately, are added.

It should be noted that the presence of a structure made of EVA with an element made of polyurethane results in an advantageous situation for the user, who benefits both from the characteristics of flexibility, lightness, elasticity and impermeability of the body made of EVA and from the characteristics of protection from impact, abrasion and perforation of the layer of polyurethane.

Furthermore it should be noted that the application of the primer eliminates the need for the operation of carding and applying the adhesive, thus reducing the number of operations required and appreciably lowering the production cycle times and the costs.

Finally it should be noted that the invention makes it possible to provide a two-color article in which the layer of polyurethane has a different color from that of the EVA, thus producing a pleasing visual impact.

The invention, thus conceived, is susceptible of numerous modifications and variations, all of which are within the scope of the appended claims. Moreover, all the details may be substituted by other, technically equivalent elements.

In practice the contingent dimensions and shapes may be any according to requirements and to the state of the art.

The disclosures in Italian Patent Application No. 102017000063339 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An article (10) constituted by a body (11) and at least one other element (12) which is at least partially overlaid, **characterized in that** said body (11) is made of EVA.

2. The article according to claim 1, **characterized in that** said body (11) has at least one region covered by an overlaid element (12) made of polyurethane.

3. The article according to the preceding claims, **characterized in that** the polyurethane penetrates at least the surface pores of the EVA.

4. A method for providing an article constituted by a body (11) made of EVA and at least one other element (12) which is at least partially overlaid, which consists of:
- molding said body (11) made of EVA by applying the primer in the molding region of the element (12).

5. The method for providing an article constituted by a body (11) made of EVA and at least one other element (12) which is at least partially overlaid according to claim 4, **characterized in that** the step of molding said element (12) made of polyurethane follows the step of molding said body (11) and the application of the primer.

6. The method for providing an article constituted by a body (11) made of EVA and at least one other element (12) which is at least partially overlaid according to claim 4, **characterized in that** the step of applying the primer is performed at the end of the molding of the body (11) made of EVA before the surface film forms.

7. The method for providing an article constituted by a body (11) made of EVA and at least one other element (12) which is at least partially overlaid according to claim 6, **characterized in that** the step of applying the primer is performed while the EVA is still at a high temperature.

8. The method for providing an article constituted by a body (11) made of EVA and at least one other element (12) which is at least partially overlaid according to claims 6 or 7, **characterized in that** said primer keeps the external pores of the EVA exposed.

9. The method for providing an article constituted by a body (11) made of EVA and at least one other element (12) which is at least partially overlaid according to claim 8, **characterized in that** said primer is based on toluene with perchloroethylene.
